# EUROPEAN PATENT SPECIFICATION

(11) **EP 1 622 464 B1**
(45) Date of publication and mention of the grant of the patent: **26.08.2015**
(21) Application number: 04716154.2
(22) Date of filing: 01.03.2004
(51) Int. Cl.: A23G 3/00

(54) **CHEWING GUM AND CONFECTIONERY COMPOSITIONS CONTAINING AN ENDOTHERMIC AGENT**
KAUGUMMI- UND SÜSSWARENZUSAMMENSETZUNGEN MIT EINEM ENDOTHERMEN WIRKSTOFF
CHEWING GUM ET COMPOSITION DE CONFISERIE CONTENANT UN AGENT ENDOTHERMIQUE

(30) Priority: 14.03.2003 US 389535
(43) Date of publication of application: 08.02.2006
(73) Proprietor: Intercontinental Great Brands LLC, East Hanover, NJ 07936 (US)
(72) Inventor: MISTRY, Atul, Branchburg, NJ 08876 (US)
(74) Representative: Wilson Gunn
(86) International application number: PCT/US2004/006233
(87) International publication number: WO 2004/082392

(56) References cited:
- EP-A- 1 151 672
- US-A- 4 753 790
- US-A- 4 851 394
- US-A- 5 015 466
- US-A- 5 536 511
- US-A1- 2001 022 964

## Description

### Field of the Invention

The present invention is generally directed to chewing gum and confectionery compositions employing an edible endothermic or temperature lowering agent useful for providing a refreshing temperature cooling sensation in the mouth of the consumer.

### Background of the Invention

Oral malodor is an undesirable condition that afflicts many people. Malodor of the oral cavity, also known as halitosis or bad breath, has been estimated to afflict about 20 to 90 million people in the United States.

Volatile sulfur compounds, mainly H₂S and CH₃SH, generated in the oral cavity have been known to be the primary cause of oral malodor. Generally, the presence of these compounds is especially noticeable after long periods of reduced saliva flow and abstinence from food or liquids, resulting in the condition known as "morning breath." Breath malodor can arise after ingesting various odor-causing foods such as garlic, cabbage and onions. The oral cavity maintains a moist, warm environment in which odor-causing microorganisms flourish. The temperature of the oral cavity has the effect of accelerating the vaporization of volatile odor-causing compounds to make even trace amounts of such compounds, noticeable especially after consuming hot foods or liquids.

To combat oral cavity malodor, the art has developed a variety of products including breath freshening gums, lozenges and mints. Such breath freshening products include formulations for killing odor-causing microorganisms, stimulating saliva flow, and/or neutralizing or masking odor-causing compounds. However, such products are not known to absorb heat energy and lower the temperature of the oral cavity.

Although it is known to incorporate polyols (i.e., sugar alcohols) into the foodstuffs, such compounds have typically been used as sugarless sweeteners, water soluble fillers, taste modifiers, and plasticizers. These compounds have not been incorporated into the foodstuffs in a manner, which will enable the foodstuff and particularly the sugar alcohol to lower of the temperature of the oral cavity. For example, U.S. Pat. App. 2002/0131990 discloses the use of polyols such as sorbitols as suitable plasticizers. WO2001048751 discloses the use of sorbitol as filler. WO 20000078292 discloses the use of sugar alcohols as alternatives to sugar ingredients. JO2000139401 discloses a film having a buffer layer containing an edible plasticizer selected from glycerol, sorbitol, mannitol, and propylene glycol. WO2000009095 discloses an extended release tablet containing a sugar or sugar alcohol filler in combination with potassium chloride to enhance greater homogeneity and more uniform dissolution.

US5536511 discloses a chewing gum pellet coated with a hard coating containing erythritol and xylitol.

EP1151672 discloses a confectionery product comprising a core and a filling enclosed within the casing wherein the casing is a protective confectionery material and the filling comprises a major amount of monosaccharide polyol in a crystalline anhydrous powder form chosen among polyol having a cooling effect.

US2001/022964 discloses physiologically acceptable films, including edible films. The films include a water soluble film-forming polymer such as pullulan. The edible films include pullulan and antimicrobially effective amounts of the essential oils thymol, methyl salicylate, eucalyptol and menthol.

US4753790 discloses a process for producing a sorbitol coated comestible.

EP1020193 discloses an oral administration preparation, in which unpleasant tastes of drugs are improved by jointly adding a sugar alcohol having a heat of dissolution of -20 cal/g or less and a pH adjusting agent to the drugs having unpleasant tastes

US5629003 discloses a presentation which, in the form of a film, permits the individual dosage of drugs, confectionary, other food, cosmetics and the like for oral application or intake. The presentation is characterized by the fact that it comprises a mass of 20 to 60%-wt. of at least a film former, 2 to 40%-wt. of at least a gel former, 0.1 to 35%-wt. of at least an active substance, and up to 40%-wt. of an inert filling agent, being applied on a carrier, or by consisting of a mass having the aforementioned composition but is unsupported.

WO03/011259 discloses edible films including at least three types of film forming agents other than pullulan, such as maltodextrins, hydrocolloids and fillers.

WO01/70194 discloses consumable films including a water soluble film-forming polymer, such as pullulan, and a taste masked pharmaceutically active agent, such as dextromethorphan.

EP0966952 relates to the use of erythritol to provide a cooling sensation in an orally used liquid product, to a beverage composition containing erythritol and to an oral care composition or a liquid pharmaceutical composition containing erythritol.

It would be an advance in the art of formulating breath freshening products to develop an edible composition containing an endothermic or temperature lowering agent capable of lowering the temperature of the oral cavity of the consumer and impart a refreshing cooling effect to the oral cavity. Such a temperature cooling effect improves mouthfeel and moderates the volatility of odor-causing compounds that contribute to oral malodor. There is also a need for consumer products, which can effectively employ the edible composition, such as for example, consumable films, chewing gums and confectionery products.

### Summary of the Invention

The present invention is directed to an edible composition containing an endothermic or temperature lowering agent in an amount sufficient to impart a temperature cooling effect when the edible composition is placed in the oral cavity by the consumer. The temperature cooling effect provides the consumer with a refreshing sensation and desirable mouthfeel. Moreover, the temperature cooling effect imparted by the edible composition of the present invention, moderates the volatility of odor-causing compounds for enhancing breath freshness. The edible composition may further include optional active ingredients such as, for example, breath freshening agents, antimicrobial agents, salivary stimulants, sulfur neutralizing agents and the like to enhance breath freshness. The edible composition of the present invention is typically but not exclusively in the form of consumable film, chewing gum and confectionery compositions.

In one aspect of the present invention, there is provided an edible composition as defined in the claims comprising an endothermic agent in combination with a physiologically acceptable carrier, wherein the endothermic agent is released imparting a temperature cooling effect in the oral cavity of the consumer.

In a further aspect of the present invention, there is provided a consumable film as defined in the claims adapted to adhere to and dissolve in the mouth of a consumer or adapted to dissolve in the month of a consumer, wherein the film comprises an endothermic agent in combination with a film forming agent. The endothermic agent is released from the consumable film imparting a temperature cooling effect to the oral cavity of the consumer. The consumable film is supple and non-adhering, and is particularly well adapted for rapidly dissolving in the mouth of the consumer. Such films can be used to deliver, in combination with the endothermic agent, a range of other active ingredients including, but not limited to, pharmaceutically active agents, oral care agents, antimicrobial agents, salivary stimulants, breath freshening agents, and the like.

### Detailed Description of the Invention

The present invention is directed to an edible composition effective for providing, upon administration, a temperature lowering effect to the oral cavity of the consumer. The edible composition comprises an endothermic or temperature lowering agent which is characterized by a relatively high negative heat of dissolution, and thus capable of absorbing heat energy in a sufficient amount to impart a temperature cooling effect to the oral cavity. Suitable forms of the edible composition include consumable films, chewing gums, and other confectioneries including, but not limited to, lozenges, tablets, pressed mints, nougats and the like. The edible composition of the present invention may further comprise at least one active ingredient including, but not limited to, breath freshening agents, antimicrobial agents, salivary stimulants, stain removing agents, sulfur neutralizing agents and combinations thereof, which are useful for treating oral malodor.

The endothermic agent of the present invention is preferably incorporated into the edible composition in a manner where the endothermic agent maintains a relatively high negative heat of dissolution while minimally interacting with the carrier. The values of the negative heat of dissolution in the present invention is generally at least about -5 cal/g, typically from about -5 cal/g to -43 cal/g.

In the present invention, the endothermic agent is a crystalline form of a sugar alcohol. Preferably, the sugar alcohol is present in the form of discrete particles. Exemplary examples of suitable sugar alcohols include xylitol, erythritol, galactitol, mannitol, maltitol, sorbitol and the like. Depending on the carrier used, the sugar alcohol may be present on the surface of the composition to form a coating layer, or discretely interspersed throughout the carrier of the composition. It is preferable that the endothermic agent (e.g., sugar alcohol) be present in the form of a coating layer to optimize the temperature cooling effect and to minimize phase transformation of the crystalline sugar alcohol through interaction with water molecules that may be present in the composition. A coloring agent may be incorporated into the crystalline sugar alcohol as desired.

The crystalline form of a sugar alcohol is readily prepared by mixing the sugar alcohol with water to yield a sugar alcohol solution. The water is removed via conventional drying techniques including, but not limited to, spray drying and roller drying. The resulting crystalline sugar alcohol has a sufficient particle size to create a temperature cooling effect upon dissolution in the consumer's mouth. The crystalline sugar alcohol may be applied to the edible composition, preferably on the surface of the edible composition, or mixed into a suitable carrier such as, for example, a dry tablet carrier in which the sugar alcohol is maintained in a crystalline form.

The crystalline sugar alcohol has a particle size that is sufficiently large to impart a temperature lowering effect perceivable by the consumer as it dissolves in the mouth. For the edible composition of the present invention, the particle size of the sugar alcohol is in the range of from 150 µm to 1,000 µm, and preferably from about 250 µm to 350 µm.

For the edible compositions of the present invention, the effective amount of the endothermic agent of the present invention present in the edible composition is an amount that lowers the temperature of the oral cavity of a warm-blooded animal including humans to a sufficient extent to impart a temperature cooling sensation in the mouth of the consumer. The temperature cooling effective amount of the endothermic agent of the present invention may vary with the type of edible composition (e.g., chewing gum, lozenge, mint, confectionery, consumable film and the like), the location of the endothermic agent in the edible composition, the degree of cooling desired, the type of endothermic agent employed and the particular carrier used in conjunction with the endothermic agent.

Except as otherwise noted, the amount of the ingredients incorporated into the edible compositions according to the present invention is designated as % by weight based on the total weight of the final composition.

For the edible composition of the present invention, the endothermic agent is typically present in an amount of from about 0.1% to 70% by weight based on the total weight of the composition, preferably from about 1% to 60% by weight, and more preferably from about 5% to 50% by weight.

The edible composition of the present invention further comprises a physiologically acceptable carrier, in an amount appropriate to accommodate the other components of the formulation. The term "physiologically acceptable carrier" refers to an orally acceptable vehicle capable of supporting or carrying the active components of the composition, and is intended to encompass compounds, which upon administration to a warm-blooded animal including humans, are adequately tolerated without causing undue adverse side effects. The carrier may further include those components of the composition that are capable of being commingled without interaction in a manner which would substantially reduce the composition's stability and/or efficacy for administration to the oral cavity in warm-blooded animals including humans, in accordance with the compositions and methods of the present invention.

Types of additives or ingredients, which may also be included in the present compositions of the present invention, include, for example, fluoride ion releasing compounds, thickening agents, humectants, flavoring agents, stain removing agents, sweeteners, anticalculus agents, alkali metal bicarbonate salts, solvents, remineralizers and other miscellaneous additives such as anti-inflammatory agents, and the like. Suitable remineralizers include, for example, calcium phosphate salts such as α-tricalcium phosphate, monocalcium phosphate monohydrate, anhydrous dicalcium phosphate, dicalcium phosphate dihydrate, octacalcium phosphate or tetracalcium phosphate; and calcium glycerophosphate, and combinations thereof.

The edible composition of the present invention may be wholly or partially consumed during the period of time that the edible composition is retained in the mouth of the consumer such as by chewing, sucking, or dissolving. Suitable effective periods of time may range from 5 seconds to 5 minutes.

The edible composition of the present invention may further comprise one or more antimicrobial agents including essential oils selected, for example, from thymol, methyl salicylate, eucalyptol and menthol. LISTERINE® brand mouthwash is, perhaps, the most well-known example of an antiseptic oral composition that has proven effective in killing microbes in the oral cavity that are responsible for bad breath. LISTERINE® brand mouthwash achieves its antimicrobial effect through a combination of essential oils that penetrate and kill the microorganisms. These essential oils include precisely balanced amounts of thymol, methyl salicylate, menthol and eucalyptol (hereinafter "the essential oils") in an aqueous alcohol solution.

Many bad breath bacteria live in pits or fissure on the surface of the tongue. Listerine® brand mouthwash reduces bad breath because of high concentrations of antimicrobial agents in a liquid medium that can easily penetrate into these pits and fissures. The edible composition of the present invention may be formulated to capture a significant portion of the hygienic benefits and the consumer appeal of LISTERINE® brand mouthwash, in a desirably portable and unobtrusively consumed form.

In one embodiment of the present invention, the edible composition is in the form of a consumable film that is particularly well adapted to adhere to and dissolve in a mouth of a consumer. The edible composition is incorporated into an otherwise typical consumable film composition manufactured by conventional techniques known in the art. The consumable film of the present invention delivers the endothermic agent efficiently to the oral cavity of the consumer, and immediately imparts a temperature cooling effect. Preferably, the endothermic agent is generally disposed on the surface of the consumable film to form a coating layer.

For the consumable film of the present invention, the amount of the endothermic agent is preferably from about 0.1% to 70% by weight based on the total weight of the consumable film, more preferably from about 10% to 40% by weight, and most preferably from about 20% to 30% by weight of the consumable film.

The consumable film of the present invention generally comprises a film forming agent, and optionally one or more of plasticizers, stabilizing agents, stain removing agents (e.g., sodium stearate), sweeteners, colorants and flavoring agents. Several formulations are possible depending on the type of consumable film desired.

The film forming agent may be selected from any water soluble polymer known in the art. Illustrative examples of suitable film forming agents used in the consumable film according to the present invention include both natural and synthetic polymers. In particular, suitable film forming agents may be selected from pullulan, hydroxypropylmethyl cellulose, hydroxyethyl cellulose, hydroxypropyl cellulose, polyvinyl pyrrolidone, carboxymethyl cellulose, polyvinyl alcohol, sodium alginate, polyethylene glycol, xanthan gum, tragacanth gum, guar gum, acacia gum, arabic gum, polyacrylic acid, methylmethacrylate copolymer, carboxyvinyl polymer, amylose, high amylose starch, hydroxypropylated high amylose starch, dextrin, pectin, chitin, chitosan, levan, elsinan, collagen, gelatin, zein, gluten, soy protein isolate, whey protein isolate, casein and combinations thereof. A preferred film forming agent is pullulan.

Except as otherwise noted in the examples, the amount of ingredients in the consumable film are expressed as % by weight based on the total weight of the consumable film, after the film formulation has been dried.

In general, the amount of film forming agent employed will vary depending on various factors such as the type of film forming agent used, consistency desired, and other components used to make the final product. The amount of the consumable film forming agent present may range from about 0.01% to 99% by weight, preferably from about 30% to 80% by weight, and more preferably from about 40% to 70% by weight of the consumable film.

The consumable film of the invention preferably comprises pullulan as a film-forming agent and can further include additional film forming agents, antimicrobial agents, plasticizers, flavoring agents, sulfur neutralizing or precipitating agents, saliva stimulating agents, surfactants, stabilizing agents, stain removing agents, emulsifying agents, thickening agents, binding agents, coloring agents, sweeteners, fragrances and the like.

Preferred plasticizers include triacetin, lecithin, lycasin, glycerol monostearate, hydrogenated vegetable fat and the like, in amounts ranging up to about 20% by weight, preferably up to about 2% by weight of the consumable film. Other suitable plasticizers include monoacetin and diacetin.

Preferred stabilizing agents include hydrocolloids such as, for example, modified starch, pectin, gelatin, carboxymethyl cellulose, xanthan gum, locust bean gum and carrageenan, in amounts of up to about 10% by weight, preferably from about 0.1% to 5% by weight of the consumable film. Other suitable stabilizing agents include guar gum and the like.

Preferred emulsifying agents include triethanolamine stearate, quaternary ammonium compounds, acacia, gelatin, lecithin, bentonite, veegum, and the like, in amounts ranging up to about 5% by weight, preferably from about 0.01% to 0.7% by weight of the consumable film.

Preferred thickening agents include methylcellulose, carboxyl methylcellulose, and the like, in amounts ranging up to about 20% by weight, preferably about 0.01% to 5% by weight of the consumable film.

Preferred binding agents include starch, in amounts ranging up to about 10% by weight, preferably about 0.01% to 2% by weight of the consumable film.

The amounts of the specific essential oils used in the consumable film of the present invention can vary as long as they are in amounts sufficient to provide antimicrobial efficacy. Generally the amount of thymol, methyl salicylate and eucalyptol is from about 0.01% to 4% by weight of the consumable film, preferably from about 0.50% to 3.0% by weight, and even more preferably from about 0.70% to 2.0% by weight of the consumable film. Menthol may be added in an amount of from about 0.01% to 15% by weight of the consumable film, preferably from about 2.0% to 10% by weight and even more preferably from about 3% to 9% by weight of the consumable film. The amounts added can be readily determined by those skilled in the art and can exceed the amounts mentioned above as long as the consumable film can be readily dissolved in the oral cavity and manufactured to specification. By way of example, the total oil content should be an amount which does not cause the film forming composition to become sticky thus making it difficult to process the composition into a consumable film. In certain embodiments, the essential oils are combined in amounts synergistically effective to kill the odor-causing microorganisms that cause bad breath.

According to the present invention, the consumable film containing the essential oils used in Listerine® brand mouthwash to provide antimicrobial efficacy, are shaped and sized to be placed in the oral cavity. The film adheres to a surface in the mouth, usually the roof of the mouth or the tongue, and quickly dissolves. The amount of essential oils in one dosage unit of the film that is a preferred size for placing in the mouth may be significantly lower than the amount of Listerine® brand mouthwash recommended for a single mouth rinse (i.e., 20 ml).

In another embodiment of the present invention, the edible composition is incorporated into an otherwise typical chewing gum composition manufactured by conventional techniques known in the art. The endothermic agent is disposed on the surface of the chewing gum to form a coating layer and optionally dispersed within the gum base of the chewing gum.

For the chewing gum composition of the present invention, the amount of the endothermic agent is preferably present in an amount of from about 0.1 % to 70% by weight based on the total weight of the chewing gum composition, more preferably from about 1 % to 60% by weight, and most preferably from about 40% to 50% by weight of the chewing gum composition.

The chewing gum generally comprises a gum base, and optionally one or more of solvents, plasticizers, sweeteners, flavoring agents and/or colorants. Several formulations are possible, depending upon the type of gum desired, e.g., sugar containing or sugarless chewing gums including those containing high intensity sweeteners such as aspartame and neotame, conventional chewing gums, center fill chewing gums or bubble gums.

The chewing gum composition of the present invention, may be coated or uncoated and be in the form or slabs, sticks, pellets, balls and the like. The composition of the different forms of the chewing gum compositions will be similar but may vary with regard to the ratio of the ingredients. For example, coated gum compositions may contain a lower percentage of softeners. Pellets and balls have a small chewing gum core, which is then coated with either a sugar solution or a sugarless solution to create a coating shell. Slabs and sticks are usually formulated to be softer in texture than the chewing gum core.

The amount of gum base employed will vary greatly depending on various factors such as the type of base used, consistency desired and other components used to make the final product. In general, the gum base may be present in an amount of from about 5% to 95% by weight based on the weight of the final chewing gum composition, preferably from about 10% to 50% by weight and more preferably from about 15% to 35% by weight of the chewing gum composition.

The gum base may be any water-insoluble gum base known in the art. Illustrative examples of suitable polymers in gum bases include both natural and synthetic elastomers and rubbers. For example, suitable polymers may include, but are not limited to, substances of vegetable origin such as natural rubber, chicle, jelutong, gutta percha, lechi caspi, crown gum, perillo, massaranduba balata, chicle, gutta hang kang or combinations thereof, and synthetic elastomers such as butadiene-styrene copolymers, polybutylene, isobutylene-isoprene copolymers, polyethylene, polyisobutylene, polyvinyl acetate, and copolymers of vinyl acetate, rosins, such as comarone resin, pontianak resin, copal gum, kauri gum, dammar gum, sweet bay gum, spruce gum, balsams and combinations thereof.

The present invention may be applied to conventional chewing gum bases that are available from commercial suppliers.

The chewing gum composition may further comprise elastomer plasticizers to aid in modifying the firmness of the finished gum. Such elastomer plasticizers include, for example, methyl, glycerol or pentaerythritol esters of rosins or modified rosins, such as hydrogenated, dimerized or polymerized rosins or combinations thereof. Examples of elastomer plasticizers suitable for use herein include pentaerythritol esters of partially hydrogenated wood rosin, pentaerythritol esters of wood rosin, glycerol esters of partially dimerized rosin, glycerol esters of polymerized rosin, glycerol esters of tall oil rosin, glycerol esters of wood rosin and partially hydrogenated wood rosin and partially hydrogenated methyl esters of rosin, such as polymers of alpha-pinene or beta-pinene; terpene resins including polyterpene; and combinations thereof. The plasticizer may be employed in an amount ranging from about 10% to 75% and preferably about 45% to 70% by weight of the chewing gum composition.

The chewing gum composition may also comprise a variety of additional ingredients such as softeners such as lanolin, stearic acid, sodium stearate, potassium stearate, glyceryl triacetate, propylene glycol, glycerol, acetylated monoglyceride, glyceryl diacetate, lecithin, fatty acids, glycerine and the like and/or waxes, for example, natural waxes, polyethylene, bees wax, petroleum waxes, such as paraffin waxes and microcrystalline waxes, to modify the softness and texture of the final product. These individual additional materials are generally employed in amounts of up to about 30% by weight and preferably in amounts of from about 3% to 20% by weight of the chewing gum composition.

The chewing gum composition may additionally comprise conventional additives such as emulsifiers such as lecithin and glyceryl monostearate; and additional fillers to modify the texture of the gum base and aid in processing the chewing gum composition such as dicalcium phosphate, tricalcium phosphate, aluminum hydroxide, magnesium hydroxide, titanium oxide, cellulose polymers, alumina, magnesium silicates, aluminum silicates, calcium carbonate, clay, talc and combinations thereof. These fillers may be used in the gum base in various amounts. Preferably, the amount of fillers when used will vary from about 1% to 60% by weight of the chewing gum composition.

In another embodiment of the present invention, the edible composition may be formulated into a confectionery. The endothermic agent is disposed on the surface of the confectionery to form a coating layer and optionally dispersed within the confectionery.

For the confectionery of the present invention, the amount of the endothermic agent is preferably from about 0.1% to 70% by weight based on the total weight of the confectionery composition, more preferably from about 1% to 60% by weight, and most preferably from about 40% to 50% by weight of the confectionery product.

The term "confectionery or confectionery product" as used herein includes, but is not limited to: nougats, candies, panning goods, gel confections, fondants, lozenges, mints, troches, pastilles, microcapsules, and other solid forms including freeze dried forms (cakes, wafers, and tablets) and fast dissolving solid forms including compressed tablets and other compositions falling within the generally accepted definition of confectionery compositions.

The term "fast dissolving solid form" as used herein means that the solid dosage form dissolves in less than about 60 seconds, preferably less than about 15 seconds, more preferably less than about 5 seconds, in the oral cavity. Lozenges include discoid shaped solids comprising a therapeutic agent in a flavored base. The base may be glycerinated gelatin, or combination of sugar with sufficient mucilage to give it form. Lozenge compositions (compressed tablet type) typically include one or more fillers (compressible sugar), flavoring agents and lubricants.

The solid carrier may be sugar, a hydrogenated starch hydrolysate ("e.g., Lycasin"), hydrogenated glucose, hydrogenated disaccharides; and/or hydrogenated polysaccharides, as the major ingredient, in an amount of from about 85% to 98% by weight of the total carrier. Solid salts such as sodium bicarbonate, sodium chloride, potassium bicarbonate or potassium chloride may also serve as solid carriers.

Tableting lubricants, in minor amounts of from about 0.1% to 5% by weight, may be incorporated to facilitate the preparation of both tablets and lozenges. Suitable lubricants include vegetable oil such as coconut oil, magnesium stearate, aluminum stearate, talc, starch and Carbowax.

Lozenge formulations may include a hydrocolloid as a barrier agent to provide a shiny surface as opposed to a tablet, which has a smooth finish.

The lozenge or tablet may optionally be coated with a coating material such as waxes, shellacs, carboxymethyl cellulose, polyethylene/maleic anhydride copolymer or Kappa-carrageenan, to further increase the time it takes the tablet or lozenge to dissolve in the mouth. The coated tablet or lozenge is slow dissolving, providing a sustained release rate of active agents of from about 3 to 5 minutes.

Confectionery compositions in the form of pressed tablets such as mints may generally be made by combining finely sifted sugar or sugar substitute, flavoring agent (e.g., peppermint flavor), bulking agent such as gum arabic, and an optional coloring agent. The flavoring agent and bulking agent are combined and then gradually the sugar or sugar substitute are added along with a coloring agent if needed.

The resulting product is then granulated by passing through a seize of desired mesh size (e.g., 12 mesh) and then dried typically at temperatures of from about 55°C to 60°C. The resulting powder is fed into a tableting machine fitted with a large size punch and the resulting pellets are broken into granules and then pressed.

A nougat composition typically includes two principal components, a high boiled candy and a frappe. By way of example, egg albumen or substitute thereof is combined with water and whisked to form a light foam. Sugar and glucose are added to water and boiled typically at temperatures of from about 130°C to 140°C and the resulting boiled product is poured into a mixing machine and beat until creamy.

The beaten albumen and flavoring agent are combined with the creamy product and the combination is thereafter thoroughly mixed.

Further details regarding the preparation of confectionery compositions can be found in Skuse's Complete Confectioner (13th Edition) (1957) including pp. 41-71, 133-144, and 255-262; and Sugar Confectionery Manufacture (2nd Edition) (1995), E.B. Jackson, Editor, pp. 129-168, 169-188, 189-216, 218-234, and 236-258.

Sulfur precipitating agents that reduce oral malodor can also be added to the edible compositions according to the present invention. These agents bind with, and inactivate, the volatile sulfur compounds that cause a large percentage of oral malodor. Sulfur precipitating agents useful in the present invention include metal salts such as copper salts and zinc salts. Preferred salts include copper gluconate, zinc citrate and zinc gluconate. The amount of sulfur precipitating agent is from about 0.01% to 2% by weight, preferably from about 0.15% to 1.5% by weight, even more preferably from about 0.25% to 1.0% by weight of the edible composition.

Salivary stimulants can also be added to the edible compositions according to the present invention. Useful salivary stimulants are those disclosed in U.S. Pat. No. 4,820,506. Salivary stimulants include food acids such as citric, lactic, malic, succinic, ascorbic, adipic, fumaric and tartaric acids. Preferred food acids are citric, malic and ascorbic acids. The amount of saliva stimulating agents in the edible composition is from about 0.01% to 12% by weight, preferably about 1% to 10% by weight, even more preferably from about 2.5% to 6% by weight of the edible composition.

Suitable flavoring agents include both natural and artificial flavors and mints, such as oil of peppermint, menthol, oil of spearmint, vanilla, oil of cinnamon, oil of wintergreen (methyl salicylate), and various fruit flavors, including but not limited to lemon oil, orange oil, grape flavor, lime oil, grapefruit oil, apple, apricot essence, and combinations thereof. The flavorings are generally utilized in amounts that will vary depending upon the individual flavor, and may, for example, range in amounts of about 0.5% to 3% by weight of the edible composition.

Colorants can be present in the chewing gums, tablets or lozenges of the present invention. Examples include pigments such as titanium dioxide, natural food colorants such as beta carotenes, betanin, turmeric, and other dyes suitable for food, drug and cosmetic applications known as F.D. & C. dyes, and the like. The materials may be incorporated in amounts of up to about 1 % by weight, preferably up to about 6% by weight of the edible composition.

Suitable sweeteners that can be included are those well known in the art, including both natural and artificial sweeteners. Suitable sweeteners include, e.g.:
A. water-soluble sweetening agents such as monosaccharides, disaccharides and polysaccharides such as xylose, ribose, glucose (dextrose), mannose, galactose, fructose (levulose), sucrose (sugar), maltose, invert sugar (a mixture of fructose and glucose derived from sucrose), partially hydrolyzed starch, corn syrup solids, dihydrochalcones, monellin, steviosides, glycyrrhizin and the like, and combinations thereof;
B. water-soluble artificial sweeteners such as the soluble saccharin salts, i.e., sodium or calcium saccharin salts, cyclamate salts, the sodium, ammonium or calcium salt of 3,4-dihydro-6-methyl-1,2,3- -oxathiazine-4-one-2, 2-dioxide, the potassium salt of 3,4-dihydro-6-methyl-1,2,3-oxathiazine-4-one-2,2-dioxide (acesulfame-K), the free acid form of saccharin and the like, and combinations thereof;
C. dipeptide based sweeteners, such as L-aspartic acid derived sweeteners, such as L-aspartyl-L-phenylalanine methyl ester (aspartame and neotame, for example) and materials described in U.S. Pat. No. 3,492,131, L-alpha-aspartyl-N-(2,2,4,4-tetramethyl-3-thietanyl)-D-alaninamide hydrate, methyl esters of L-aspartyl-L-phenylglycerin and L-aspartyl-L-2,5,dihydrophenyl-glycine, L-aspartyl-2,5-dihydro-L-phenylalanine, L-aspartyl-L-(1-cyclohexyen)-alanine, and the like, and combinations thereof;
D. water-soluble sweeteners derived from naturally occurring water-soluble sweeteners, such as a chlorinated derivative of ordinary sugar (sucrose), known, for example, under the product description of sucralose; and
E. protein based sweeteners such as thaumatoccous danielli (Thaumatin I and II).

In general, an effective amount of sweetener is utilized to provide the level of sweetness and bulk desired for a particular edible composition, and this amount will vary with the sweetener selected. This amount will normally be 0.01% to 10% by weight of the composition when using an easily extractable sweetener. The water-soluble sweeteners described in category A above, are usually used in amounts of about 0.01% to 10% by weight, and preferably in amounts of about 2% to 5% by weight. Some of the sweeteners in category A (e.g., glycyrrhizin) can be used in amounts set forth for categories B-E below due to the sweeteners' known sweetening ability. In contrast, the sweeteners described in categories B-E are generally used in amounts of about 0.01% to 10% by weight, with about 2% to 8% by weight being preferred and about 3% to 6% by weight being most preferred. These amounts may be used to achieve a desired level of sweetness independent from the flavor level achieved from any optional flavor oils used.

The flavoring agents that can be used include those known to the skilled artisan, such as natural and artificial flavors. These flavorings may be chosen from synthetic flavor oils and flavoring aromatics, and/or oils, oleo resins and extracts derived from plants, leaves, flowers, fruits and so forth, and combinations thereof. Representative flavor oils include: spearmint oil, cinnamon oil, peppermint oil, clove oil, bay oil, thyme oil, cedar leaf oil, oil of nutmeg, oil of sage, and oil of bitter almonds. Also useful are artificial, natural or synthetic fruit flavors such as vanilla, chocolate, coffee, cocoa and citrus oil, including lemon, orange, grape, lime and grapefruit and fruit essences including apple, pear, peach, strawberry, raspberry, cherry, plum, pineapple, apricot and so forth. These flavorings can be used individually or in admixture. Commonly used flavors include mints such as peppermint, artificial vanilla, cinnamon derivatives, and various fruit flavors, whether employed individually or in admixture. Flavorings such as aldehydes and esters including cinnamyl acetate, cinnamaldehyde, citral, diethylacetal, dihydrocarvyl acetate, eugenyl formate, p-methylanisole, and so forth may also be used.

Generally, any flavoring or food additive, such as those described in Chemicals Used in Food Processing, publication 1274 by the National Academy of Sciences, pages 63-258, may be used. Further examples of aldehyde flavorings include, but are not limited to acetaldehyde (apple); benzaldehyde (cherry, almond); cinnamic aldehyde (cinnamon); citral, i.e., alpha citral (lemon, lime); neral, i.e. beta citral (lemon, lime); decanal (orange, lemon); ethyl vanillin (vanilla, cream); heliotropine, i.e., piperonal (vanilla, cream); vanillin (vanilla, cream); alpha-amyl cinnamaldehyde (spicy fruity flavors); butyraldehyde (butter, cheese); valeraldehyde (butter, cheese); citronellal (modifies, many types); decanal (citrus fruits); aldehyde C-8 (citrus fruits); aldehyde C-9 (citrus fruits); aldehyde C-12 (citrus fruits); 2-ethyl butyraldehyde (berry fruits); hexenal, i.e. trans-2 (berry fruits); tolyl aldehyde (cherry, almond); veratraldehyde (vanilla); 2,6-dimethyl-5-heptenal, i.e. melonal (melon); 2-6-dimethyloctanal (green fruit); and 2-dodecenal (citrus, mandarin); cherry; grape; mixtures thereof; and the like.

The amount of flavoring employed is normally a matter of preference subject to such factors as flavor type, individual flavor, and strength desired. Thus, the amount may be varied in order to obtain the result desired in the final product. Such variations are within the capabilities of those skilled in the art without the need for undue experimentation. In general, amounts of about 0.1% to 30% by weight are useable with amounts of about 2% to 25% by weight being preferred and amounts from about 8% to 10% by weight are more preferred.

The compositions of this invention can also contain coloring agents or colorants. The coloring agents are used in amounts effective to produce the desired color. The coloring agents useful in the present invention, include pigments such as titanium dioxide, which may be incorporated in amounts of up to about 5% by weight, and preferably less than about 1 % by weight. Colorants can also include natural food colors and dyes suitable for food, drug and cosmetic applications. These colorants are known as FD&C dyes and lakes. The materials acceptable for the foregoing spectrum of use are preferably water-soluble, and include FD&C Blue No. 2, which is the disodium salt of 5,5-indigotindisulfonic acid. Similarly, the dye known as Green No. 3 comprises a triphenylmethane dye and is the monosodium salt of 4-[4-N-ethyl-p-sulfobenzylamino) diphenyl-methylene]-[1-N-ethyl-N-p-sulfonium benzyl)-2,5-cyclo-hexadienimine]. A full recitation of all FD&C and D&C dyes and their corresponding chemical structures may be found in the Kirk-Other Encyclopedia of Chemical Technology, Volume 5, Pages 857-884.

### EXAMPLE 1

### Consumable Film Composition

A consumable film formed from the ingredients set forth in Table 1 was prepared in the following manner.

**Table 1**

| **Ingredients** | **Amount (%w/w) dry** |
|---|---|
| Film Forming Agent | 40.0 to 70.0 |
| Hydrocolloid | 1.0 to 5.0 |
| Plasticizer | 5.0 to 15.0 |
| Flavoring Agent | 15.0 to 25.0 |
| Endothermic Agent (e.g., xylitol) | 5.0 to 25.0 |
| | |
| **Total** | 100.00 |

A film forming agent (e.g., pullulan, carboxymethyl cellulose, modified food starch or combinations thereof) and a hydrocolloid (e.g., carrageenan, locust bean gum, xanthan gum, pectin or combinations thereof) were dispersed in a sufficient amount of water to form a slurry. The resulting slurry was continuously agitated and heated to a temperature of about 50°C. A flavoring agent and a plasticizer (e.g., glycerin, propylene glycol or polyethylene glycol) were blended in a separate container and thereafter added to the slurry. The slurry was mixed thoroughly until homogenized. The slurry was cast and dried to form a film. As the slurry dried, the endothermic agent (i.e., xylitol) was uniformly disposed on the semi-dry surface of the consumable film with a powder spreader or a sprinkling device. The film was allowed to completely dry, and the dried film was cut into strips.

### EXAMPLE 2

### Chewing Gum Composition

A chewing gum formed from the ingredients set forth in Table 2 was prepared in the following manner.

**Table 2**

| **Ingredients** | **Amount (%w/w)** |
|---|---|
| Gum base | 15 to 40 |
| Endothermic agent (e.g. crystalline xylitol) | 55 to 80 |
| Filler | 5 to 30 |
| Flavoring Agent | 0.1 to 5 |
| Intense Sweetener (e.g., neotame) | 0.01 to 0.1 |
| Plasticizer | 2 to 10 |
| Coloring agent | 0 to 0.5 |
| | |
| **Total** | 100.00 |

The gum base was heated to a temperature from about 80°C to 90°C until completely melted. The plasticizer (e.g., lecithin, lycasin or triacetin) and filler (e.g., talc or calcium carbonate) were mixed together in a separate container. The melted gum base and the mixture containing the plasticizer and filler were added to a gum-mixing kettle and mixed. The temperature was maintained at from about 45°C to 60°C throughout the mixing process. The endothermic agent (i.e., crystalline xylitol) was then added to the kettle and blended with the mixture. The intense sweetener, coloring agent and flavoring agent were added to the mixture in the kettle and the resulting mixture was blended. Mixing was continued until a chewing gum having a homogenous dough-like consistency was achieved. The chewing gum was then transferred to a sheeting apparatus, and then to a rolling and scoring machine to form individual pieces of chewing gum in the form of slabs, sticks or pellets, for example. The chewing gum pieces were then coated by dusting with crystalline xylitol.

### EXAMPLE 3

### Confectionery Composition

A chewing gum formed form the ingredients set forth in Table 3 was prepared in the following manner.

**Table 3**

| **Ingredients** | **Amount (%w/w)** |
|---|---|
| Endothermic agent (e.g., crystalline xylitol) | 25 to 50 |
| Polyol syrup (e.g., maltitol syrup, sorbitol syrup) | 25 to 50 |
| Hydrocolloid | 2 to 6 |
| Plasticizers | 2 to 10 |
| Intense sweetener (e.g., neotame) | 0.01 to 0.05 |
| Flavoring agent | 0.1 to 5 |
| Coloring agent | 0 to 0.5 |
| Water | 1 to 5 |
| | |
| **Total** | 100.00 |

The hydrocolloid was dissolved in water and then heated to a temperature up to 60°C to yield a hydrocolloid solution. A small portion of xylitol was mixed with melted plasticizers, intense sweetener, flavoring agent and color to yield a plasticizer mixture. In a separate temperature control container, a polyol syrup was whipped and mixed with a small amount of xylitol and water and heated to a temperature of about 110°C to yield a sugarless fondant. The hydrocolloid mixture was then added to the sugarless fondant in the temperature control container and mixed. The resulting mixture was cooled to 80°C. The remaining xylitol and the plasticizer mixture were then added to the cooled mixture and mixed to yield a molten candy mass. The candy mass was allowed to cool followed by coating with crystalline xylitol. The cooled candy mass was then formed and cut to desired shape or size.

## Claims

1. An edible composition comprising an endothermic agent in combination with a physiologically acceptable carrier, wherein the endothermic agent is present in a manner in which the endothermic agent is released from the carrier imparting a temperature cooling effect to the oral cavity of the consumer, wherein the endothermic agent is a crystalline form of a sugar alcohol and comprises a particle size from 150µm to 1000µm wherein the endothermic agent is present in the form of a coating layer.

2. The edible composition of claim 1 wherein the endothermic agent has a heat of dissolution of at least -5 cal/g.

3. The edible composition of claim 1 or claim 2 wherein the sugar alcohol is selected from the group consisting of xylitol, erythritol, galactitol, mannitol, maltitol, sorbitol and combinations thereof.

4. The edible composition of any preceding claim, wherein the endothermic agent is present in an amount of from about 0.1% to 70% by weight based on the total weight of the edible composition.

5. The edible composition of any of claims 1 to 4 wherein the endothermic agent is dispersed within the edible composition.

6. The edible composition of any preceding claim, in the form of a consumable film.

7. The edible composition of claim 1, wherein the edible composition is in the form of a chewing gum and wherein the endothermic agent is present on the surface of the chewing gum in the form of a coating layer and dispersed within the gum base of the chewing gum.

8. The edible composition of any preceding claim in the form of a confectionery.

9. The edible composition of claim 1, wherein the carrier is a solid carrier and is selected from sugar, a hydrogenated starch hydrolysate, hydrogenated glucose, hydrogenated disaccharides, and/or hydrogenated polysaccharides, in an amount of about 85% to 98% by weight of the total carrier.

10. The edible composition of claim 1, wherein the carrier is a solid and is selected from sodium bicarbonate, sodium chloride , potassium bicarbonate, or potassium chloride.

11. A consumable film adapted to adhere to and dissolve in the mouth of a consumer, comprising a film forming agent in combination with an endothermic agent, wherein the endothermic agent is present in manner in which the endothermic agent is released from the film forming agent imparting a temperature cooling effect to the oral cavity of the consumer, wherein the endothermic agent is a crystalline form of a sugar alcohol and has a particle size of from 150µm to 1000µm.

12. The consumable film of claim 11 wherein the endothermic agent has a heat of dissolution of at least -5 cal/g.

13. The consumable film of claim 11 or claim 12 wherein the endothermic agent is present on the surface of the consumable film.

14. The consumable film of any of claims 11 to 13 wherein the sugar alcohol is selected from xylitol, erythritol, galactitol, mannitol, maltitol, sorbitol and combinations thereof.

15. The consumable film of any of claims 11 to 14 wherein the endothermic agent is present in an amount of from about 0.1% to 70% by weight based on the total weight of the consumable film.

16. The consumable film of any one of claims 11 to 15, wherein said film forming agent is a water soluble polymer.

17. The consumable film of claim 16 wherein the film forming agent is selected from pullulan, hydroxypropylmethyl cellulose, hydroxyethyl cellulose, hydroxypropyl cellulose, polyvinyl pyrrolidone, carboxymethyl cellulose, polyvinyl alcohol, sodium alginate, polyethylene glycol, tragacanth gum, guar gum, acacia gum, arabic gum, polyacrylic acid, methylmethacrylate copolymer, carboxyvinyl polymer, amylose, high amylose starch, hydroxypropylated high amylose starch, dextrin, pectin, chitin, chitosan, levan, elsinan, collagen, gelatin, zein, gluten, soy protein isolate, whey protein isolate, casein and combinations thereof.

18. The consumable film of claim 17 wherein said film forming agent is pullulan.

19. The consumable film of any one of claims 11 to 18, wherein the film forming agent is present in an amount of from about 40% to 80% by weight based on the total weight of the consumable film.

20. The consumable film of any one of claims 11 to 19 further comprising at least one essential oil.

21. The consumable film of claim 20 wherein the at least one essential oil is selected from thymol, methyl salicylate, eucalyptol, menthol and combinations thereof.

22. The consumable firm of claim 21 wherein:
thymol is present in an amount of from about 0.01% to 4% by weight;
methyl salicylate is present in an amount of from about 0.01% to 4% by weight;
eucalyptol is present in an amount of from about 0.01% to 4% by weight; and
menthol is present in an amount of from about 0.01% to 15% by weight, each based on the total weight of the consumable film.

23. A consumable film adapted to dissolve in the mouth of a consumer, comprising pullulan and an endothermic agent on the surface of the consumable film, wherein the endothermic agent is a crystalline form of a sugar alcohol and has a particle size of from 150µm to 1000µm.

24. The consumable film of claim 23, wherein the endothermic agent has a heat of dissolution of at least -5 cal/g.

25. The consumable film of claim 23 or 24, wherein the sugar alcohol is selected from xylitol, erythritol, galactitol, mannitol, maltitol, sorbitol and combinations thereof.

26. The consumable film of any one of claims 23 to 25 wherein the endothermic agent is present in an amount of from about 0.1% to 70% by weight based on the total weight of the consumable film.

## Patentansprüche

1. Essbare Zusammensetzung, umfassend einen endothermen Stoff in Kombination mit einem physiologisch verträglichen Träger, wobei der endotherme Stoff entsprechend vorhanden ist, so dass der endotherme Stoff von dem Träger freigesetzt wird, wodurch ein Temperaturkühleffekt auf die Mundhöhle des Konsumenten ausgeübt wird, wobei es sich bei dem endothermen Stoff um eine kristalline Form eines Zuckeralkohols handelt und dieser eine Teilchengröße von 150 µm bis 1000 µm aufweist, wobei der endotherme Stoff in Form einer Deckschicht vorhanden ist.

2. Essbare Zusammensetzung nach Anspruch 1, wobei die Lösungswärme des endothermen Stoffs mindestens -5 cal/g beträgt.

3. Essbare Zusammensetzung nach Anspruch 1 oder Anspruch 2, wobei der Zuckeralkohol aus der Gruppe ausgewählt ist, die aus Xylit, Erythrit, Galaktit, Mannit, Maltit, Sorbit und Kombinationen derselben besteht.

4. Essbare Zusammensetzung nach einem der vorhergehenden Ansprüche, wobei der endotherme Stoff in einer Menge von ungefähr 0,1 bis 70 Gewichtsprozent bezogen auf das Gesamtgewicht der essbaren Zusammensetzung vorhanden ist.

5. Essbare Zusammensetzung nach einem der Ansprüche 1 bis 4, wobei der endotherme Stoff in der essbaren Zusammensetzung dispergiert ist.

6. Essbare Zusammensetzung nach einem der vorhergehenden Ansprüche in Form eines konsumierbaren Films.

7. Essbare Zusammensetzung nach Anspruch 1, wobei die essbare Zusammensetzung in Form eines Kaugummis vorliegt und wobei der endotherme Stoff an der Oberfläche des Kaugummis in Form einer Deckschicht vorliegt und in der Kaugummibasis des Kaugummis dispergiert ist.

8. Essbare Zusammensetzung nach einem der vorhergehenden Ansprüche in Form einer Süssware.

9. Essbare Zusammensetzung nach Anspruch 1, wobei es sich bei dem Träger um in einen Feststoffträger handelt und dieser ausgewählt ist aus Zucker, einem hydrierten Stärkehydrolysat, hydrierter Glukose, hydrierten Disacchariden und/oder hydrierten Polysacchariden, in einer Menge von ungefähr 85 bis 98 Gewichtsprozent des gesamten Trägers.

10. Essbare Zusammensetzung nach Anspruch 1, wobei der Träger ein Feststoff ist und aus Natriumbicarbonat, Natriumchlorid, Kaliumbicarbonat oder Kaliumchlorid ausgewählt ist.

11. Konsumierbarer Film, entsprechend eingerichtet, so dass er am Mund eines Konsumenten anhaftet und sich darin auflöst, umfassend einen filmbildenden Stoff in Kombination mit einem endothermen Stoff, wobei der endotherme Stoff entsprechend vorhanden ist, so dass der endotherme Stoff von dem filmbildenden Stoff freigesetzt wird, wodurch ein Temperaturkühleffekt auf die Mundhöhle des Konsumenten ausgeübt wird, wobei es sich bei dem endothermen Stoff um eine kristalline Form eines Zuckeralkohols handelt und dieser eine Teilchengröße von 150 µm bis 1000 µm aufweist.

12. Konsumierbarer Film nach Anspruch 11, wobei die Lösungswärme des endothermen Stoffs mindestens -5 cal/g beträgt.

13. Konsumierbarer Film nach Anspruch 11 oder Anspruch 12, wobei der endotherme Stoff sich an der Oberfläche des konsumierbaren Films befindet.

14. Konsumierbarer Film nach einem der Ansprüche 11 bis 13, wobei der Zuckeralkohol aus Xylit, Erythrit, Galaktit, Mannit, Maltit, Sorbit und Kombinationen derselben ausgewählt ist.

15. Konsumierbarer Film nach einem der Ansprüche 11 bis 14, wobei der endotherme Stoff in einer Menge von ungefähr 0,1 bis 70 Gewichtsprozent bezogen auf das Gesamtgewicht des konsumierbaren Films vorhanden ist.

16. Konsumierbarer Film nach einem der Ansprüche 11 bis 15, wobei es sich bei dem filmbildenden Stoff um ein wasserlösliches Polymer handelt.

17. Konsumierbarer Film nach Anspruch 16, wobei der filmbildende Stoff ausgewählt ist aus Pullulan, Hydroxypropylmethylcellulose, Hydroxyethylcellulose, Hydroxypropylcellulose, Polyvinylpyrrolidon, Carboxymethylcellulose, Polyvinylalkohol, Natriumalginat, Polyethylenglykol, Tragantgummi, Guarkernmehl, Akaziengummi, Gummi arabicum, Polyacrylsäure, Methylmethacrylat-Copolymer, Carboxyvinylpolymer, Amylose, amylosereiche Stärke, hydroxypropylierte amylosereiche Stärke, Dextrin, Pectin, Chitin, Chitosan, Levan, Elsinan, Kollagen, Gelatine, Zein, Gluten, Sojaproteinisolat, Molkeproteinisolat, Casein und Kombinationen derselben.

18. Konsumierbarer Film nach Anspruch 17, wobei es sich bei dem filmbildenden Stoff um Pullulan handelt.

19. Konsumierbarer Film nach einem der Ansprüche 11 bis 18, wobei der filmbildende Stoff in einer Menge von ungefähr 40 bis 80 Gewichtsprozent bezogen auf das Gesamtgewicht des konsumierbaren Films vorhanden ist.

20. Konsumierbarer Film nach einem der Ansprüche 11 bis 19, darüber hinaus mindestens ein ätherisches Öl umfassend.

21. Konsumierbarer Film nach Anspruch 20, wobei das mindestens eine ätherische Öl aus Thymol, Methylsalicylat, Eukalyptol, Menthol und Kombinationen derselben ausgewählt ist.

22. Konsumierbarer Film nach Anspruch 21, wobei:
Thymol in einer Menge von ungefähr 0,01 bis 4 Gewichtsprozent vorhanden ist,
Methylsalicylat in einer Menge von ungefähr 0,01 bis 4 Gewichtsprozent vorhanden ist,
Eukalyptol in einer Menge von ungefähr 0,01 bis 4 Gewichtsprozent vorhanden ist, und
Menthol in einer Menge von ungefähr 0,01 bis 15 Gewichtsprozent vorhanden ist, jeweils bezogen auf das Gesamtgewicht des konsumierbaren Films.

23. Konsumierbarer Film, entsprechend eingerichtet, so dass er sich im Mund eines Konsumenten auflöst, umfassend Pullulan und einen endothermen Stoff an der Oberfläche des konsumierbaren Films, wobei es sich bei dem endothermen Stoff um eine kristalline Form eines Zuckeralkohols handelt und dieser eine Teilchengröße von 150 µm bis 1000 µm aufweist.

24. Konsumierbarer Film nach Anspruch 23, wobei die Lösungswärme des endothermen Stoffs mindestens -5 cal/g beträgt.

25. Konsumierbarer Film nach Anspruch 23 oder Anspruch 24, wobei der Zuckeralkohol aus der Gruppe ausgewählt ist, die aus Xylit, Erythrit, Galaktit, Mannit, Maltit, Sorbit und Kombinationen derselben besteht.

26. Konsumierbarer Film nach einem der Ansprüche 23 bis 25, wobei der endotherme Stoff in einer Menge von ungefähr 0,1 bis 70 Gewichtsprozent bezogen auf das Gesamtgewicht des konsumierbaren Films vorhanden ist.

## Revendications

1. Composition comestible comprenant un agent endothermique en association avec un support vecteur acceptable de manière physiologique, dans laquelle l'agent endothermique est présent de telle manière que l'agent endothermique soit libéré du support vecteur en procurant à la cavité buccale du consommateur un effet de diminution de la température, dans laquelle l'agent endothermique se présente sous une forme cristalline d'un alcool glucidique et comprend une taille de particule comprise entre 150 µm et 1000 µm, dans laquelle l'agent endothermique est présent sous la forme d'une couche de revêtement.

2. Composition comestible selon la revendication 1, dans laquelle l'agent endothermique présente une chaleur de dissolution au moins égale à - 5 cal /g.

3. Composition comestible selon la revendication 1 ou la revendication 2, dans laquelle l'alcool glucidique est sélectionné dans le groupe constitué par un xylitol, un érythritol, un galactitol, un mannitol, un maltitol, un sorbitol et des associations de ceux-ci.

4. Composition comestible selon l'une quelconque des revendications précédentes, dans laquelle l'agent endothermique est présent en une quantité approximativement comprise entre 0,1 % et 70 % en poids sur la base du poids total de la composition comestible.

5. Composition comestible selon l'une quelconque des revendications 1 à 4, dans laquelle l'agent endothermique est dispersé à l'intérieur de la composition comestible.

6. Composition comestible selon l'une quelconque des revendications précédentes, qui se présente sous la forme d'un film consommable.

7. Composition comestible selon la revendication 1, dans laquelle la composition comestible se présente sous la forme d'un chewing-gum, et dans laquelle l'agent endothermique est présent à la surface du chewing-gum sous la forme d'une couche de revêtement, et est dispersé à l'intérieur de la gomme de base du chewing-gum.

8. Composition comestible selon l'une quelconque des revendications précédentes, qui se présente sous la forme d'une confiserie.

9. Composition comestible selon la revendication 1, dans laquelle le support vecteur est un support vecteur solide qui est sélectionné dans le groupe constitué par un sucre, un hydrolysat d'amidon hydrogéné, un glucose hydrogéné, des disaccharides hydrogénés, et / ou des polysaccharides hydrogénés, en une quantité approximativement comprise entre 85 % et 98 % en poids du support vecteur total.

10. Composition comestible selon la revendication 1, dans laquelle le support vecteur est un solide qui est sélectionné dans le groupe constitué par un bicarbonate de soude, un chlorure de sodium, un bicarbonate de potassium, ou un chlorure de potassium.

11. Film consommable adapté de façon à adhérer dans la bouche d'un consommateur et à se dissoudre dans celle-ci, comprenant un agent filmogène en association avec un agent endothermique, dans lequel l'agent endothermique est présent de telle manière que l'agent endothermique soit libéré de l'agent filmogène en procurant à la cavité buccale du consommateur un effet de diminution de la température, dans lequel l'agent endothermique se présente sous une forme cristalline d'un alcool glucidique et présente une dimension de particule comprise entre 150 µm et 1000 µm.

12. Film consommable selon la revendication 11, dans lequel l'agent endothermique présente une chaleur de dissolution au moins égale à-5 cal / g.

13. Film consommable selon la revendication 11 ou la revendication 12, dans lequel l'agent endothermique est présent à la surface du film consommable.

14. Film consommable selon l'une quelconque des revendication 11 à 13, dans lequel l'alcool glucidique est sélectionné dans le groupe constitué par un xylitol, un érythritol, un galactitol, un mannitol, un maltitol, un sorbitol et des associations de ceux-ci.

15. Film consommable selon l'une quelconque des revendications 11 à 14, dans lequel l'agent endothermique est présent en une quantité approximativement comprise entre 0,1 % et 70 % en poids sur la base du poids total du film consommable.

16. Film consommable selon l'une quelconque des revendications 11 à 15, dans lequel ledit agent filmogène est un polymère soluble dans l'eau.

17. Film consommable selon la revendication 16, dans lequel l'agent filmogène est sélectionné dans le groupe constitué par un pullulane, une hydroxypropylméthylcellulose, une hydroxyéthylcellulose, une hydroxypropylcellulose, une polyvinylpyrrolidone, une carboxyméthylcellulose, un polyalcool de vinyle, un alginate de sodium, un glycol polyéthylénique, une gomme de tragacanthe, une gomme de guar, une gomme d'acacia, une gomme arabique, un acide polyacrylique, un copolymère de méthylméthacrylate, un polymère de carboxyvinyle, une amylose, un amidon riche en amylose, un amidon riche en amylose hydroxypropylique, une dextrine, une pectine, une chitine, un chitosane, un lévane, un elsinane, un collagène, une gélatine, une zéine, un gluten, un isolat de protéine de soja, un isolat de protéine lactosérique, une caséine, et des associations de ceux-ci.

18. Film consommable selon la revendication 17, dans lequel ledit agent filmogène est un pullulane.

19. Film consommable selon l'une quelconque des revendications 11 à 18, dans lequel l'agent filmogène est présent en une quantité approximativement comprise entre 40 % et 80 % en poids sur la base du poids total du film consommable.

20. Film consommable selon l'une quelconque des revendications 11 à 19, comprenant en outre au moins une huile essentielle.

21. Film consommable selon la revendication 20, dans lequel la ou les huiles essentielles sont sélectionnées dans le groupe constitué par un thymol, un salicylate de méthyle, un eucalyptol, un menthol, et des associations de ceux-ci.

22. Film consommable selon la revendication 21, dans lequel :
un thymol est présent en une quantité approximativement comprise entre 0,01 % et 4 % en poids ;
un salicylate de méthyle est présent en une quantité approximativement comprise entre 0,01 % et 4 % en poids ;
un eucalyptol est présent en une quantité approximativement comprise entre 0,01 % et 4 % en poids ; et
un menthol est présent en une quantité approximativement comprise entre 0,01 % et 15 % en poids,
chacun d'eux étant basé sur le poids total du film consommable.

23. Film consommable adapté de façon à se dissoudre dans la bouche d'un consommateur, comprenant un pullulane et un agent endothermique à la surface du film consommable, dans lequel l'agent endothermique se présente sous une forme cristalline d'un alcool glucidique et présente une dimension de particule comprise entre 150 µm et 1000 µm.

24. Film consommable selon la revendication 23, dans lequel l'agent endothermique présente une chaleur de dissolution au moins égale à-5 cal / g.

25. Film consommable selon la revendication 23 ou la revendication 24, dans lequel l'alcool glucidique est sélectionné dans le groupe constitué par un xylitol, un érythritol, un galactitol, un mannitol, un maltitol, un sorbitol et des associations de ceux-ci.

26. Film consommable selon l'une quelconque des revendications 23 à 25, dans lequel l'agent endothermique est présent en une quantité approximativement comprise entre 0,1 % et 70 % en poids sur la base du poids total du film consommable.
